# EUROPEAN PATENT APPLICATION

(11) **EP 4 593 461 A1**
(43) Date of publication of application: **30.07.2025**
(21) Application number: 23886143.9
(22) Date of filing: 27.10.2023
(51) Int. Cl.: H04W 36/00, H04W 36/18, H04W 36/38

(54) **METHOD AND DEVICE FOR CONFIGURING TCI STATE FOR CELL SWITCHING IN WIRELESS COMMUNICATION SYSTEM**

(30) Priority: 03.11.2022 KR 20220145500
(71) Applicant: Samsung Electronics Co., Ltd., Suwon-si, Gyeonggi-do 16677 (KR)
(72) Inventor: PARK, Kyoungmin, Suwon-si Gyeonggi-do 16677 (KR); KIM, Youngbum, Suwon-si Gyeonggi-do 16677 (KR); RYU, Hyunseok, Suwon-si Gyeonggi-do 16677 (KR); CHOI, Seunghoon, Suwon-si Gyeonggi-do 16677 (KR)
(74) Representative: Nederlandsch Octrooibureau
(86) International application number: PCT/KR2023/016815
(87) International publication number: WO 2024/096447

(57) **Abstract**

The present disclosure relates to a 5G or 6G communication system for supporting higher data transmission rates. A method performed by means of a base station in a wireless communication system, of the present disclosure, comprises the steps of: receiving, from at least one candidate base station, random access channel (RACH) configuration information related to timing advance (TA) acquisition of the at least one candidate base station; transmitting, on the basis of link quality measurement results, to a user equipment, information for acquisition of a TA associated with a candidate base station; receiving, from the candidate base station, TA information associated with the candidate base station; and transmitting, to the user equipment, a medium access control (MAC) control element (CE) including TA information and information indicating handover to the candidate base station.

## Description

### [Technical Field]

The disclosure relates to a wireless communication system or a mobile communication system. Specifically, the disclosure relates to a method and a device for configuring a TCI for cell switching between candidate cells in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

According to the disclosure, in implementing a low-latency mobility support technique that performs handover based on L1/L2 measurement or L1/L2 signaling in a wireless communication system or a mobile communication system, the RAN1 signal and operation procedures used for L1 measurement and handover command delivery before handover are proposed. The technical subjects pursued in the disclosure may not be limited to the above-mentioned technical subjects, and other technical subjects which are not mentioned may be clearly understood from the following descriptions by those skilled in the art to which the disclosure pertains.

### [Solution to Problem]

According to an embodiment for solving the above problem, there may be provided a method performed by a base station in a wireless communication system, the method including receiving, from at least one candidate base station, random access channel (RACH) configuration information related to acquisition of a timing advance (TA) of the at least one candidate base station, transmitting, to a user equipment (UE), information for acquisition of a TA associated with a candidate base station, based on a link quality measurement result, receiving, from the candidate base station, TA information associated with the candidate base station, and transmitting, to the UE, a medium access control (MAC) control element (CE) including the TA information and information indicating handover to the candidate base station.

### [Advantageous Effects of Invention]

According to the embodiments proposed in the disclosure, when performing handover to a candidate cell selected by a network, the UE can perform a handover operation instead of performing an RRC reconfiguration operation after a handover command.

In addition, the UE experiences a short interruption time to ensure link stability and to ensure UE performance in an environment where frequent handovers occur.

Advantageous effects obtainable from the disclosure may not be limited to the above - mentioned effects, and other effects which are not mentioned may be clearly understood from the following descriptions by those skilled in the art to which the disclosure pertains.

### [Brief Description of Drawings]

FIG. 1 illustrates a handover procedure between SA base stations in a wireless communication system according to various embodiments of the disclosure.
FIG. 2 illustrates a fast handover procedure in a wireless communication system according to various embodiments of the disclosure.
FIG. 3 illustrates an example of configuring a TCI state according to various embodiments of the disclosure.
FIG. 4 illustrates a structure of a base station according to various embodiments of the disclosure.
FIG. 5 illustrates a structure of a UE according to various embodiments of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

In a cellular network, when each cell is responsible for communication in a specific area and a UE moves, a connection is switched to a cell responsible for communication in a new area to which the UE has moved, by serving cell switching, i.e., handover. In the existing communication method, each cell may have a different detailed configuration regarding the method of communicating with the UE, and this information is provided to the UE through system information broadcasting and RRC configuration. Therefore, the UE performing a handover first acquires system information by receiving the broadcast from a target cell, and then performs an RRC reconfiguration process by receiving the RRC configuration of the target cell while the handover is in progress.

The RRC reconfiguration operation has the disadvantage of requiring a lot of signaling overhead and processing latency compared to other operations based on L1/L2 signaling. As a solution to this problem, Rel-18 discusses a handover or cell switching techniques based on L1/L2 signaling. The discussion aims to prevent the RRC reconfiguration operation from being performed after the handover decision until cell switching or serving cell change is completed, and to reduce the handover interruption time through various other optimizations. The disclosure proposes the L1/L2-based operations that should precede the handover decision to support the L1/L2 signal-based handover, the method of performing the operations, and the control commands and overall operation structure that should be delivered or performed simultaneously with the handover command.

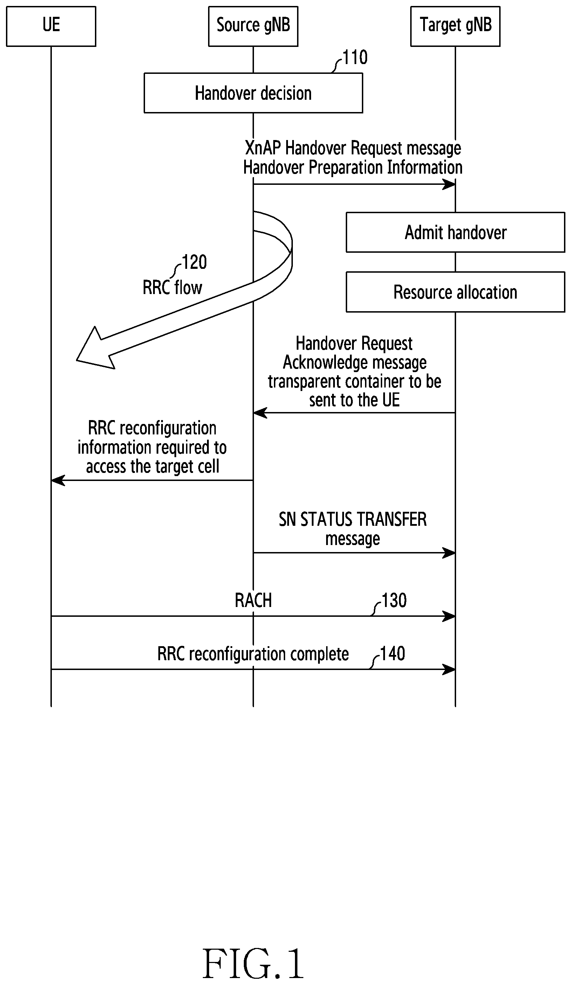

FIG. 1 illustrates a handover procedure between SA base stations in a wireless communication system according to various embodiments of the disclosure. With respect to only the inter-gNB handover shown in FIG. 1, the following cell may be interpreted to have the same meaning as a base station or gNB.

A source cell may receive an L3 measurement value, reported by a UE for each cell as a cell specific parameter, and may compare the L3 measurements for multiple cells to determine whether to perform a handover and a target cell to which a handover is to be performed. When a handover is determined, the source cell notifies the target cell of the handover decision, and the target cell may determine whether to permit the handover by considering a traffic load of a cell, and the like.

When handover is permitted, the target cell may transmit the handover permission to the source cell and at the same time, may deliver, to the UE that is to perform the handover through RRC, information about radio resources and other configurations to be used by the UE to access the target cell. At this time, the target cell does not directly deliver information about radio resources and other configurations to be used by the UE to access the target cell, but may deliver the information to the source cell and then allow the source cell to deliver the information through the wireless link that the source cell uses to communicate with the UE. The UE that has received information about the radio resources and other configurations that the UE should use to access the target cell attempts to access the target cell through the RACH process, and when the access is successful, the UE may modify all relevant configurations to information needed to communicate with the target cell through RRC reconfiguration. The UE may disconnect from the existing source cell and simultaneously establish a connection to the target cell as a new serving cell.

Referring to FIG. 1, the existing handover procedure may be largely configured by the following four operations.

Operation 110: Operation in which the source cell determines the handover based on the L3 measurement

Operation 120: The target cell approves the start of the handover procedure and transmits the RRC default configuration to the UE.

Operation 130: Operation in which the UE attempts to access the target cell through a RACH

Operation 140: Operation in which the wireless link configuration of the UE is reconfigured to match the target cell, the connection to the existing source cell is terminated, and the target cell is selected as a new serving cell.

In operation 140, operations 110 to 130 should be performed sequentially after the handover decision, which may result in latency, interruption time, signaling overhead, etc.

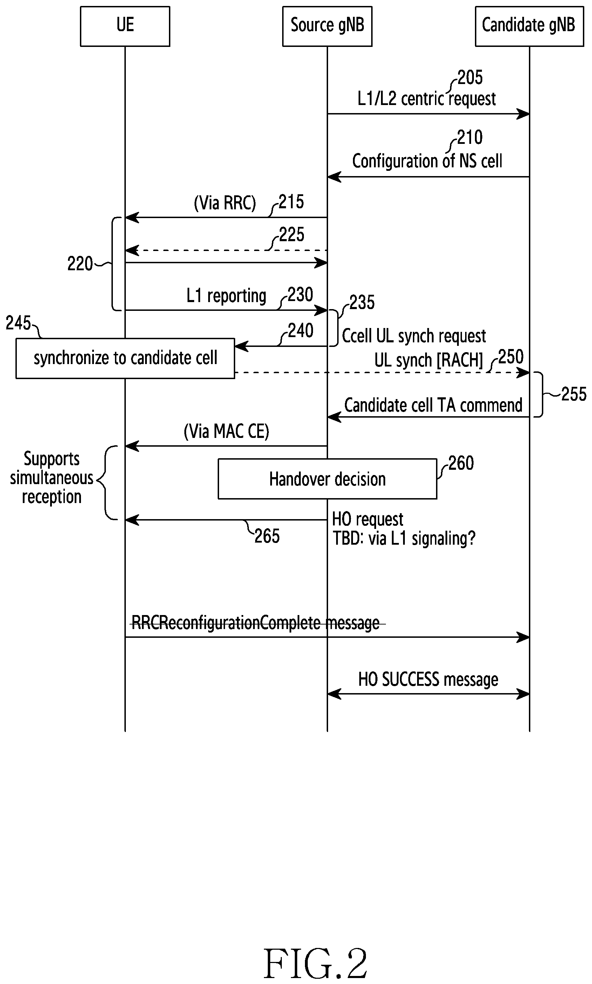

FIG. 2 illustrates a fast handover procedure in a wireless communication system according to various embodiments of the disclosure.

The handover operation proposed by the disclosure may be configured by the following processes. In the following operations, a source cell may be interpreted as a source base station, and a candidate cell may be interpreted as a candidate base station.

In operation 205, the source cell may select a candidate cell to which a fast handover is to be performed and notify the candidate cell of the candidate cell selection. For each UE, the source cell is able to select a different candidate cell.

In operation 210, the candidate cell may transmit, to the source cell, the link configuration required for the fast handover of the UE or configuration information required for initial connection. For example, the candidate cell may transmit RRC configuration information to the source cell.
- With regard to the transmission of the link configuration required for fast handover of the UE or configuration information required for initial connection, the candidate cell may be characterized by transmitting configurations for the RACH process, such as synchronization signal block (SSB) configurations and PRACH radio resource configurations for the UE, to the source cell.
- In addition, with regard to the transmission of the configurations for the RACH process to the source cell, it may be characterized by separately classifying and transmitting information for the RACH process performed to obtain candidate cell synchronization (e.g., candidate cell timing advance (TA) information), which is different from the information used for a general RACH process.
- For example, the RACH process configuration information that the candidate cell uses to configure itself as a serving cell, or that the candidate cell transmits to a UE that the candidate cell is to access by a method other than fast handover may be different from the configuration information for the RACH process performed during fast handover in the above process. For example, the PRACH radio resources used in the fast handover process may be different from the PRACH radio resources configured for the RACH process performed for other objectives.

In operation 215, the source cell may transmit the configuration information delivered by the candidate cell to the corresponding UE. The information may be transmitted through RRC configuration, etc.
- In delivering the above information, information for candidate cell discovery or initial transmission targeting a candidate cell may be delivered to the UE in the form of a TCI state. Information for initial transmission may be, for example, information about SSB and a reference signal to be used for initial synchronization to be used for PRACH transmission.
- In transmitting TCI state information to the UE, the source cell notifies the UE that each TCI state is a TCI state intended for the measurement of the candidate cell, and this may be delivered in the form of a candidate cell index, candidate cell PCID, and the like. The source cell may deliver TCI state information for multiple candidate cells to the UE or may notify the UE of multiple TCI states for the same candidate cell. To this end, candidate cell information may be configured for each TCI state.

In operation 220, when multiple pieces of information about candidate cells are received, the UE may store each piece of information as information about a separate candidate cell. For example, the UE may store the received multiple pieces of information about the candidate cells as configuration information for a first candidate cell and configuration information for a second candidate cell.

In operation 225, the source cell may transmit information about link quality measurement for the candidate cell to the UE in the form of an RS resource, RS resource set, or RS resource group to be measured.
- At this time, information about the reference signal of the candidate cell to be measured by the UE may be delivered to the UE in the form of a TCI state.
- TCI state information for measuring the link quality of the candidate cell transmitted from the source cell to the UE may be different from the TCI state information configured in operation 215, or may be part of the TCI state information configured in operation 215.
- The candidate cell link quality measurement information transmitted from the source cell to the UE may have the purpose and configuration of activating a part of the TCI states configured in operation 215 to be applied to the link quality measurement for a specific channel of the UE and the reception or transmission of a specific RS or a specific channel. For example, this information may be configured such that a part of the TCI state for measuring/detecting a candidate cell configured with RRC in operation 215 is activated through the MAC CE.
- Alternatively, when the TCI state information for link quality measurement that the source cell is to configure in operation 225 is the same as the information delivered in operation 215, the source cell may omit to perform operation 225 for the corresponding UE.
- Alternatively, when the source cell is only to support the measurement and discovery of the UE for some of the candidate cells among the candidate cells delivered to a specific UE in the previous operation, the source cell may instruct the UE to perform measurement or discovery only for the corresponding candidate cell. The command may be delivered in such a way that the source cell assigns to the UE only a TCI state indicating the reference signal of a specific candidate cell or activates the TCI state.

In addition, in operation 225, the source cell may instruct the UE to measure and report the candidate cell link quality information based on the transmitted reference signal.
- When the instruction to measure and report the candidate cell link quality information for the UE of the source cell is performed in a periodic CSI reporting format, a semi-persistent or aperiodic reporting format, or an event-triggered reporting format in which reporting is performed in specific cases.
- When the instruction to measure and report the candidate cell link quality information for the UE of the source cell is performed using a method in which continuous reporting is performed with only initial configurations without a separate reporting command such as periodic CSI reporting, operation 225 may be omitted.
- Alternatively, the instruction to measure and report the candidate cell link quality information for the UE of the source cell may be a command to report other than a measurement report for the channel, or a command to perform candidate cell measurement and discovery without reporting. For example, the above command may be a command for the source cell to instruct the UE to perform a synchronization operation on a specific candidate cell. The UE may be instructed to secure downlink synchronization for a specific candidate cell. In this case, the UE may be instructed to report the downlink synchronization result to the source cell, or may only perform the synchronization operation without reporting. As another example, the above command may be a command that the source cell instructs to the UE to perform uplink synchronization for a specific candidate cell. When receiving such a command, the UE may acquire uplink synchronization information for the indicated candidate cell by using the downlink reception time difference between the reference signal used for downlink synchronization of the cell for which uplink synchronization has been completed, e.g., the source cell, and the reference signal used to secure downlink synchronization of the indicated candidate cell.
- Regarding various examples of the disclosure, when the source cell transmits a measurement command to the UE, information on the reference signal to be measured and the candidate cell to be measured are transmitted in the form of a TCI state.
- The TCI state delivered in operation 225 may be delivered in various formats such as TCI state configuration, TCI state update, TCI state activation, TCI state indication, and the like.

In operation 230, when receiving an instruction to measure and report the candidate cell link quality information for the UE of the source cell, the UE may report measurement information to the source cell by using the received reference signal.
- For example, when receiving an instruction to measure and report the link quality, the UE may deliver instant measurement information, such as good beam index, L1-RSRP, and L1-SINR to the source cell.
- Alternatively, the UE may, for example, transmit information obtained by collecting multiple measurement results based on a time domain, a spatial domain, etc., to the source cell.
- Alternatively, for example, when the UE is instructed to perform synchronization, the UE may report, to the source cell, information about whether synchronization is secured, a candidate cell TA value acquired through synchronization, or information on the reference signal used for candidate cell synchronization. Specifically, when the candidate cell TA value is acquired, the UE may store the TA value by associating the TA value with the TCI state instructing to perform the operation. Alternatively, when the UE selects a random TCI state and performs the operation, the acquired TA value may be associated with the corresponding TCI state and stored. Alternatively, when there is no TCI state corresponding to the DL RS of the candidate cell used by the UE to acquire the TA value, the UE may report this to the source cell so that a new TCI state may be configured. When the corresponding TCI state is configured as a new TCI state, the UE may associate the measured TA value with the corresponding TCI state and store the same.
- Alternatively, when the UE is unable to perform the indicated command, the UE may report to the source cell that the command cannot be performed.

In operation 235, according to a result of the report from the UE, the source cell may repeatedly perform operations 205 to 230, for example, may re-select a candidate cell, or may repeatedly perform a part of operations 205 to 230 until a specific condition is satisfied.
- For example, the reporting of link quality for the candidate cell of the UE may continue until the next operation is required.

In operations 240 to 250, the source cell may instruct the UE to perform uplink transmission to a specific candidate cell.
- The source cell may configure a specific UE to prepare for the next operation to perform fast handover for a specific candidate cell, based on the measurement and reporting results from the UE, and may instruct the specific UE to perform operations 240 to 250.
- The corresponding uplink transmission may be used to acquire the information required for the UE to perform a fast handover to the candidate cell. For example, the corresponding uplink transmission may be an uplink transmission to secure TA information for a specific candidate cell. The uplink transmission performed to secure TA information may be performed based on the information, which has been delivered by the source cell to the UE in operation 215.
- For example, the uplink transmission of the disclosure may be PRACH transmission, and a PRACH radio resource used at this time may be a part of the radio resource configured in operation 215.
- In case of performing uplink transmission for this objective, when selecting a portion of the radio resources configured in operation 215, the radio resources to be used may be designated by the source cell in operations 240 to 250. For example, in operations 240 to 250, the source cell may designate a portion of the PRACH transmission radio resources configured in operation 215 and deliver the same to the UE for use. At this time, the radio resource used may be a radio resource randomly selected by the UE.
- The operation of designating radio resources used for uplink transmission in operations 240 to 250 may be performed through TCI state indication or TCI state designation.
- In addition, when performing the uplink transmission, the candidate cell may be notified that the uplink transmission is an operation to be performed prior to a fast handover operation. The notification to the candidate cell may be performed in a manner in which the UE transmits specific information together with the uplink transmission, the source cell notifies the candidate cell of the specific information during transmission, or the uplink transmission is configured to use a specific radio resource in operation 210.
- The uplink transmission operation of the UE may be characterized by receiving information necessary for transmission configurations, such as a synchronization reference signal to be applied by the UE, a radio resource selection reference signal, and a beam application reference signal, through the TCI state.

In operation 255, the candidate cell may deliver feedback about uplink transmission to the source cell rather than the UE.
- The candidate cell may recognize that the transmission of the UE in operations 240 to 250 is transmission for a specific objective and may deliver feedback information about the UE transmission to the source cell rather than the UE.
- To support the above operation, the candidate cell may be characterized by being capable of recognizing which cell is the serving cell, i.e., source cell, of the UE when receiving the transmission of operations 240 to 250 from a predetermined UE or when selecting a candidate cell that has delivered feedback information. For example, the candidate cell may determine a cell to which the transmission belongs, depending on the radio resources used for the transmission of operations 240 to 250. Alternatively, the transmission in operations 240 to 250 may include information about the source cell of the UE. Alternatively, when performing the transmission in operations 240 to 250, the source cell may notify the corresponding candidate cell that the transmission in operations 240 to 250 is performed.
- The candidate cell may deliver feedback information by transmitting information about the TCI state applied by the UE to the source cell. For example, a plurality of TCI states indicating a plurality of SSBs of the corresponding candidate cell, respectively, or a plurality of TCI states indicating a plurality of PRACH radio resources, respectively, are configured in the source cell, and when the UE applies one of these TCI states to perform PRACH transmission, the candidate cell may transmit, to the UE, the PRACH radio resource used for the PRACH transmission of the UE or SSB information corresponding thereto together with feedback information. Based on this transmission, the source cell may identify the TCI state that the UE applied to the uplink transmission in operations 240 to 250. Thereafter, the source cell may store the received feedback information or transmit the same to the UE.
- When receiving the feedback information, the source cell is characterized by recognizing whether the feedback information corresponds to the feedback on the transmission of a UE.
- The source cell may transmit the feedback information, e.g., TA information for a specific candidate cell of a specific UE measured by PRACH transmission, to the corresponding UE, or when it is determined that the use or application of the information is not required, the source cell may store the information instead of transmitting the same to the UE.
- In operation 255, when the source cell notifies the corresponding UE of the feedback information or stores the feedback information instead of notifying of the same, the source cell notifies of or stores information about a TCI state of the corresponding UE with which the feedback information is associated. For example, when PRACH transmission is performed in operations 240 to 250 and the corresponding operation is performed through the third TCI state, the source cell notifies of or stores information indicating that the candidate cell TA value determined by the PRACH is obtained through the third TCI state of the UE.

In operation 260, the source cell may determine whether to perform fast handover and designate a target cell to which the handover is to be performed.
- Through the operations of operations 205 to 255, the source cell may determine whether the corresponding UE needs to perform fast handover to the candidate cell.

In operation 265, the base station may instruct the UE to perform a fast handover.
- When it is determined to perform a fast handover, the base station may notify the corresponding UE of this determination.
- The notification to the UE may include information required to receive the channel and RS transmitted by the candidate cell, and may not include information corresponding to RRC reconfiguration.
- For example, the notification may include information about the TCI state that the UE should apply to receive the transmission of the candidate cell.
- When a TA value corresponding to the TCI state transmitted through operation 255 or 230 exists, the UE may perform communication with the cell for which fast handover has been determined by applying the TA value.
- Although a TA value corresponding to the TCI state transmitted through operation 255 exists, the source cell does not transmit the TA value to the corresponding UE, the TA value may be transmitted to the UE together with the TCI state.

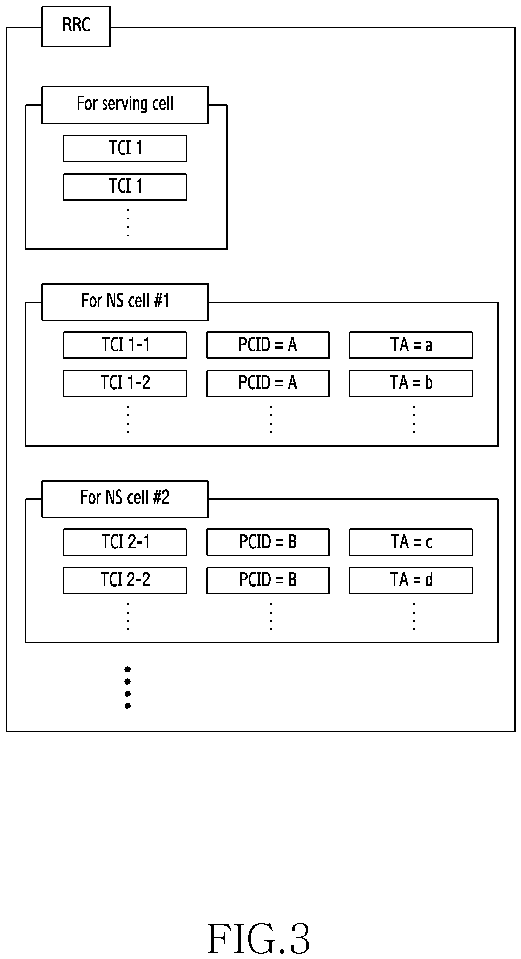

FIG. 3 illustrates an example of configuring a TCI state according to various embodiments of the disclosure.

FIG. 3 shows pieces of additional information that should be included in the TCI state in order to perform the operation of FIG. 2. For example, each TCI state may be associated with candidate cell identification information, e.g., a candidate cell PCID, and may be associated with a TA value for the candidate cell. Multiple TCI states configured for the same candidate cell may be associated with the same or different TA values, or only some TCI states may be associated with TA values.

As described in operations 205 to 265 of FIG. 2, the specific details of configuring, activating, and indicating the TCI state for a candidate cell are as follows. However, there is no limitation thereto.

According to an embodiment of the disclosure, the RRC configuration of the candidate cell TCI state may be configured in operation 215, in which the RRC configuration for the candidate cell is delivered to the UE. Alternatively, the RRC configuration of the candidate cell TCI state may be performed by a measurement instruction from the source cell to the UE in operation 225. Alternatively, the RRC configuration of the candidate cell TCI state may be performed by a subsequent operation based on the report from the UE to the source cell in operation 230.

According to an embodiment of the disclosure, the activation of the candidate cell TCI state may be performed after the TCI state configuration for the candidate cell in operation 215 and before performing other operations. Alternatively, the activation of the candidate cell TCI state may be performed for the measurement instruction or reporting instruction of operation 225. Alternatively, the activation of the candidate cell TCI state may be performed in operation 230 by way of a TCI state update based on the UE reporting, and may be performed for the uplink transmission of operations 240 to 250. In addition, the activation of the candidate cell TCI state may be performed in operation 265 together with the fast handover instruction of the source cell.

According to an embodiment of the disclosure, the candidate cell TCI state indication may be performed to provide a measurement instruction or reporting instruction of the source cell to the UE in operation 225. Additionally, the candidate cell TCI state indication may be performed in operation 230 by way of a TCI state update based on the UE reporting, and may also be performed for uplink transmission in operations 240 to 250. Additionally, the candidate cell TCI state indication may be performed together with the fast handover instruction of the source cell in operation 265.

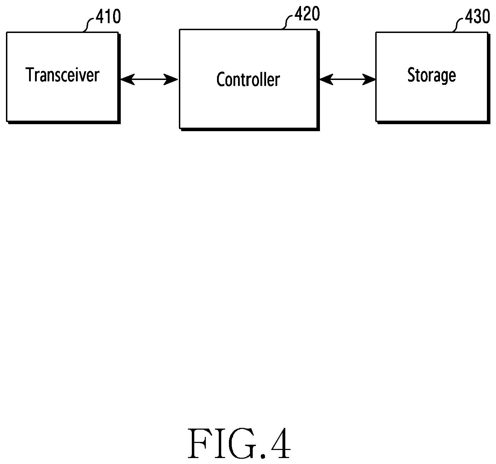

FIG. 4 illustrates a structure of a base station according to various embodiments of the disclosure.

Referring to FIG. 4, the base station may include a transceiver 410, a controller 420, and a storage 430. The transceiver 410, the controller 420, and the storage 430 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 410 and the controller 420. Furthermore, the transceiver 410, the controller 420, and the storage 430 may be implemented in the form of a single chip.

The transceiver 410 refers to a base station receiver and a base station transmitter as a whole, and may transmit/receive signals with the UE, other base stations, and other network devices. The transmitted/received signals may include control information and data. The transceiver 410 may transmit, for example, system information, synchronization signals, or reference signals to the UE. To this end, the transceiver 410 may include an RF transmitter configured to up-convert and amplify the frequency of transmitted signals, an RF receiver configured to low-noise-amplify received signals and down-convert the frequency thereof, and the like. However, this is only an embodiment of the transceiver 410, and the components of the transceiver 410 are not limited to the RF transmitter and the RF receiver. The transceiver 410 may include wired/wireless transceivers, and may include various components for transmitting/receiving signals. In addition, the transceiver 410 may receive signals through a communication channel (e.g., a radio channel), output the same to the controller 420, and transmit signals output from the controller 420 through the communication channel. Furthermore, the transceiver 410 may receive communication signals, output same to a processor, and transmit signals output from the processor to the UE, other base stations, or other network entities through a wired/wireless network.

The storage 430 may store programs and data necessary for operations of the base station. In addition, the storage 430 may store control information or data included in signals acquired by the base station. The storage 430 may include storage media such as a ROM, a RAM, a hard disk, a CD-ROM, and a DVD, or a combination of storage media. In addition, the storage 430 may store at least one of information transmitted/received through the transceiver 410 and information generated through the controller 420.

As used herein, the controller 420 may be defined as a circuit, an application specific integrated circuit, or at least one processor. The processor may include a communication processor (CP) which performs control for communication and an application processor (AP) which controls upper layers such as application programs. The controller 420 may control the overall operation of the base station according to the embodiments proposed in the disclosure. For example, the controller 420 may control signal flows between the respective blocks to perform operations according to the above-described flowcharts.

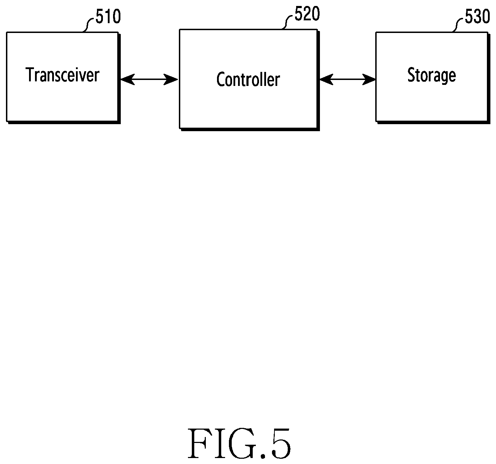

FIG. 5 illustrates a structure of a UE according to various embodiments of the disclosure.

Referring to FIG. 5, the UE may include a transceiver 510, a controller 520, and a storage 530. The transceiver 510, the controller 520, and the storage 530 may be operated according to the above-described communication methods of the UE. Components of the UE are not limited to the above-described example. For example, the UE may include a larger or smaller number of components than the above-described components. For example, the UE may include the transceiver 510 and the controller 520. Furthermore, the transceiver 510, the controller 520, and the storage 530 may be implemented in the form of a single chip.

The transceiver 510 refers to a UE receiver and a UE transmitter as a whole, and may transmit/receive signals with a base station, any other UE, or a network entity. The signals transmitted/received with the base station may include control information and data. The transceiver 510 may receive, for example, system information, synchronization signals, or reference signals from the base station. To this end, the transceiver 510 may include an RF transmitter configured to up-convert and amplify the frequency of transmitted signals, an RF receiver configured to low-noise-amplify received signals and down-convert the frequency thereof, and the like. However, this is only an embodiment of the transceiver 510, and the components of the transceiver 510 are not limited to the RF transmitter and the RF receiver. Also, the transceiver 510 may include wired/wireless transceivers, and may include various components for transmitting/receiving signals. In addition, the transceiver 510 may receive signals through a radio channel, output the same to the controller 520, and transmit signals output from the controller 520 through the radio channel. Furthermore, the transceiver 510 may receive communication signals, output same to a processor, and transmit signals output from the processor to a network entity through a wired/wireless network.

The storage 530 may store programs and data necessary for operations of the UE. In addition, the storage 530 may store control information or data included in signals acquired by the UE. The storage 530 may include storage media such as a ROM, a RAM, a hard disk, a CD-ROM, and a DVD, or a combination of storage media.

As used herein, the controller 520 may be defined as a circuit, an application specific integrated circuit, or at least one processor. The processor may include a communication processor (CP) which performs control for communication and an application processor (AP) which controls upper layers such as application programs. The controller 520 may control the overall operation of the UE according to the embodiments proposed in the disclosure. For example, the controller 520 may control signal flows between the respective blocks to perform operations according to the above-described flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

**In** the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a base station in a wireless communication system, the method comprising:
receiving, from at least one candidate base station, random access channel (RACH) configuration information related to acquisition of a timing advance (TA) of the at least one candidate base station;
transmitting, to a user equipment (UE), information for acquisition of a TA associated with a candidate base station, based on a link quality measurement result;
receiving, from the candidate base station, TA information associated with the candidate base station; and
transmitting, to the UE, a medium access control (MAC) control element (CE) including the TA information and information indicating handover to the candidate base station.

2. The method of claim 1, wherein the TA information corresponds to a TCI state associated with the candidate base station, and
wherein the RACH configuration information related to acquisition of the TA of the at least one candidate base station is configured by the UE for each of the at least one candidate base station.

3. The method of claim 1, wherein the information for acquisition of the TA is transmitted through a physical random access channel (PRACH), and
wherein a radio resource used for the PRACH is configured based on the RACH configuration information.

4. The method of claim 1, comprising:
transmitting, to the UE, the RACH configuration information and information indicating a measurement report of a link quality associated with the at least one candidate base station; and
receiving, from the UE, a link quality measurement result for the at least one candidate base station.

5. A base station in a wireless communication system, the base station comprising:
a transceiver; and
a controller coupled to the transceiver,
wherein the controller is configured to:
receive, from at least one candidate base station, random access channel (RACH) configuration information related to acquisition of a timing advance (TA) of the at least one candidate base station;
transmit, to a user equipment (UE), information for acquisition of a TA associated with a candidate base station, based on a link quality measurement result;
receive, from the candidate base station, TA information associated with the candidate base station; and
transmit, to the UE, a medium access control (MAC) control element (CE) including the TA information and information indicating handover to the candidate base station.

6. The base station of claim 5, wherein the TA information corresponds to a TCI state associated with the candidate base station, and
wherein the RACH configuration information related to acquisition of the TA of the at least one candidate base station is configured by the UE for each of the at least one candidate base station.

7. The base station of claim 5, wherein the information for acquisition of the TA is transmitted through a physical random access channel (PRACH), and
wherein a radio resource used for the PRACH is configured based on the RACH configuration information.

8. The base station of claim 5, wherein the controller is configured to:
transmit, to the UE, the RACH configuration information and information indicating a measurement report of a link quality associated with the at least one candidate base station; and
receive, from the UE, a link quality measurement result for the at least one candidate base station.

9. A method performed by a user equipment (UE) in a wireless communication system, the method comprising:
receiving, from a base station, information for acquisition of a timing advance (TA) associated with a candidate base station, based on a link quality measurement result; and
receiving, from the base station, a medium access control (MAC) control element (CE) including TA information associated with the candidate base station and information indicating handover to the candidate base station.

10. The method of claim 9, wherein the TA information corresponds to a TCI state associated with the candidate base station.

11. The method of claim 9, wherein the information for acquisition of the TA is transmitted through a physical random access channel (PRACH), and
wherein a radio resource used for the PRACH is configured based on the RACH configuration information.

12. The method of claim 9, comprising:
receiving, from the base station, RACH configuration information and information indicating a measurement report of a link quality associated with at least one candidate base station;
transmitting, to the base station, a link quality measurement result for the at least one candidate base station; and
transmitting, to the candidate base station, a random access preamble for acquisition of the TA information associated with the candidate base station.

13. A user equipment (UE) in a wireless communication system, the UE comprising:
a transceiver; and
a controller coupled to the transceiver,
wherein the controller is configured to:
receive, from a base station, information for acquisition of a timing advance (TA) associated with a candidate base station, based on a link quality measurement result; and
receive, from the base station, a medium access control (MAC) control element (CE) including TA information associated with the candidate base station and information indicating handover to the candidate base station.

14. The UE of claim 13, wherein the TA information corresponds to a TCI state associated with the candidate base station;
wherein the information for acquisition of the TA is transmitted through a physical random access channel (PRACH), and
wherein a radio resource used for the PRACH is configured based on the RACH configuration information.

15. The UE of claim 13, wherein the controller is configured to:
receive, from the base station, RACH configuration information and information indicating a measurement report of a link quality associated with at least one candidate base station;
transmit, to the base station, a link quality measurement result for the at least one candidate base station; and
transmit, to the candidate base station, a random access preamble for acquisition of TA information associated with the candidate base station.
